# EUROPEAN PATENT APPLICATION

(11) **EP 1 555 189 A1**
(43) Date of publication of application: **20.07.2005**
(21) Application number: 03756667.6
(22) Date of filing: 17.10.2003
(51) Int. Cl.: B62D 5/04

(54) **ELECTRIC POWER-STEERING APPARATUS**

(30) Priority: 18.10.2002 JP 2002304736
(71) Applicant: NSK Ltd., Tokyo 141-8560 (JP)
(72) Inventor: TANAKA, Atsushi, c/o NSK LTD., Maebashi-shi, Gunma 371-0853 (JP); SOMEYA, Kenji, c/o NSK LTD., Maebashi-shi, Gunma 371-0853 (JP)
(74) Representative: Baldwin, Mark
(86) International application number: PCT/JP2003/013300
(87) International publication number: WO 2004/035369

(57) **Abstract**

An electric power steering apparatus including a rack shaft (21) formed with a first rack (27) meshing with a first pinion (25) connected to a steering shaft (3) and with a second rack (43) meshing with a second pinion (41) driven by a power assist mechanism, wherein the power assist mechanism includes an electric motor (31) and power transmission means for transmitting a driving force of said electric motor to the second pinion (41), and the electric motor is disposed substantially in parallel with the rack shaft (21).

## Description

### Technical Field

The present invention relates generally to a rack assist type electric power steering apparatus of a dual pinion type, and more particularly to a technology contrived to downsize the apparatus in a compact configuration.

### Background Arts

Over the recent years, there has been progressed development of an electric power steering apparatus (which will hereinafter be referred to as an electric power steering system abbreviated to EPS) using an electric motor as a power source in a steering system for an automobile. The EPS has no direct driving loss (which is an engine driving loss related to a hydraulic pump) of an engine because of using an on-vehicle battery as a power source of an electric motor, and can restrain a traveling fuel consumption down to a low level because of the electric motor being driven only when performing steering assist.

A steering gear for a passenger car mainly adopts a rack-and-pinion type at the present time because of its being high of rigidity and light of weight, etc.. Then, the EPS for the rack-and-pinion type steering gear adopts, in addition to a column assist type for driving a steering shaft, a pinion assist type for driving a pinion meshing with a rack shaft, a rack assist type for driving the rack shaft itself, and so on. The pinion assist type EPS has a construction, wherein the electric motor is normally mounted inside or outside a steering gear box installed at a lower side end of the steering shaft, and drives the pinion in accordance with steering torque.

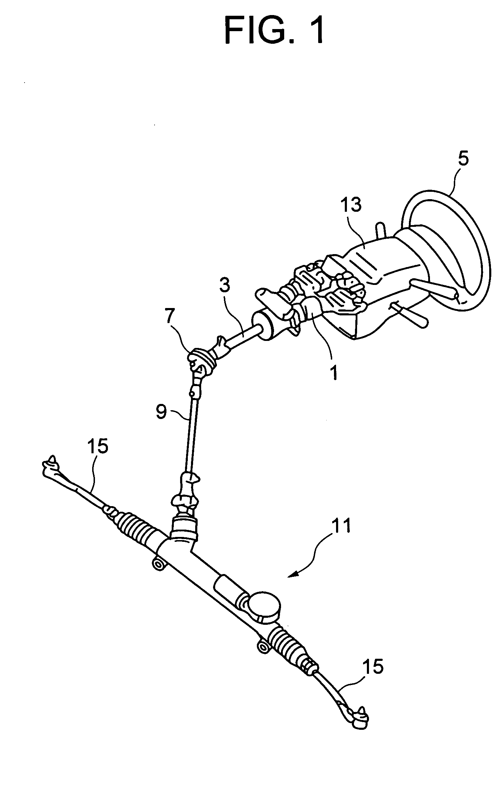

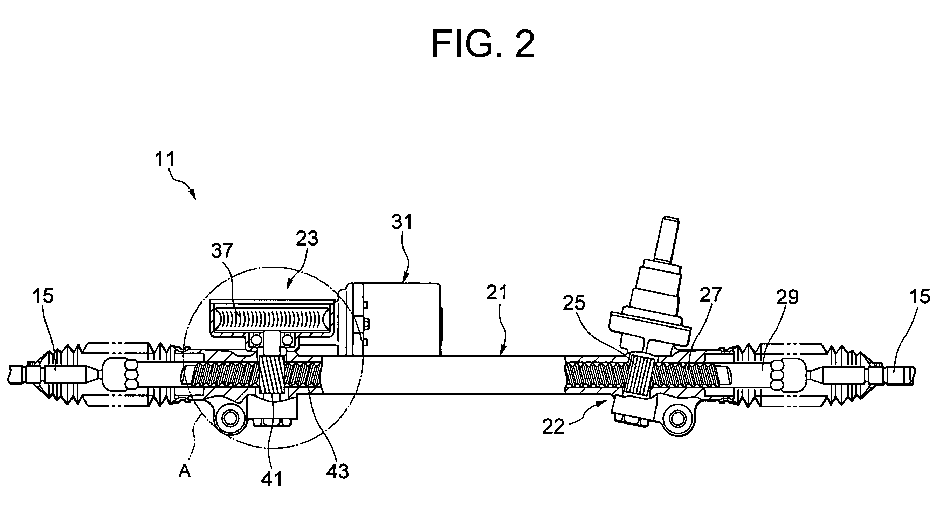

The conventional pinion assist type EPS has, however, such problems that the steering gear box unit increases in its size due to the installation of the electric motor, and it is difficult to mount the EPS and lay out the engine, auxiliary machinery, etc. within the engine room, and so forth. Such being the case, there is proposed a dual pinion type EPS in which a pinion driven by the power assist mechanism is provided separately from the pinion connected to the steering shaft, and the power assist mechanism (i.e., the electric motor) can be thereby disposed in a desired position on the rack shaft (refer to, e.g., Japanese Utility Model Publication No.02-021346 (p.2, FIGS. 1 and 2)).

In the dual pinion type EPS disclosed in Japanese Utility Model Publication No.02-021346 (p.2, FIGS. 1 and 2), the electric motor is disposed substantially coaxially with the pinion, and its axis has a comparatively large angle to the rack shaft. Hence, it follows that a space in an upper portion of the power assist mechanism is occupied by the protruded electric motor, and there still exist the problems that it is difficult to mount the EPS and lay out the engine, the auxiliary machinery, etc. in the engine room, and so forth. Moreover, in the case of taking the construction as in Japanese Utility Model Publication No.02-021346 (p.2, FIGS. 1 and 2), a worm speed reduction mechanism having a large speed reduction ratio can not be adopted, and there arises such problems that it is difficult to select the electric motor, the number of constructive members rises, and so on.

### Disclosure of the Invention

It is an object of the present invention, which was devised under such circumstances, to provide a dual pinion type electric power steering apparatus contrived to decrease its size in a compact configuration in order to improve mountability and a degree of freedom of layout of peripheral devices.

To accomplish the above object, according to the present invention, an electric power steering apparatus includes a rack shaft formed with a first rack meshing with a first pinion connected to a steering shaft and with a second rack meshing with a second pinion driven by a power assist mechanism, wherein the power assist mechanism comprises an electric motor and power transmission means for transmitting a driving force of the electric motor to the second pinion, and the electric motor is disposed substantially in parallel with the rack shaft.

According to the present invention, the electric motor does not protrude from the rack housing that houses the rack shaft. Hence, the mountability of the electric power steering apparatus on a vehicle is improved, and simultaneously layout of an engine, auxiliary machinery, etc. is facilitated.

Further, in the electric power steering apparatus according to the present invention, it is preferable that the power transmission means is a worm speed reduction mechanism. In this case, a large speed reduction ratio is easily obtained, and selection of the electric motor is facilitated. In addition, the number of constructive members becomes smaller than in the case of using other speed reduction mechanisms.

### Brief Description of the Drawings

FIG. 1 is a perspective view showing a portion, on a car-room side, of a steering apparatus according to the present invention;
FIG. 2 is a rear view of a dual pinion type EPS according to a first embodiment of the present invention;
FIG. 3 is an enlarged view of a portion A in FIG. 2; and
FIG. 4 is a sectional view taken along the line B-B in FIG. 3.

### Embodiment of the Invention

One embodiment of the present invention will hereinafter be described with reference to the drawings.

FIG. 1 is a perspective view showing a portion, on a vehicle compartment side, of an electric power steering apparatus according to the embodiment. A member designated by a numeral 1 in FIG. 1 represents a steering column which rotatably supports an upper steering shaft 3. A steering wheel 5 is attached to an upper end of the upper steering shaft 3, while a lower steering shaft 9 is connected a lower end of the shaft 3 through a universal joint 7.

A steering gear mechanism constructed of a rack-and-pinion mechanism, a power assist mechanism, etc. is further connected to a lower end of the lower steering shaft 9. In FIG. 1, the numeral 13 designates a column cover for covering the steering column 1, and the numeral 15 denotes tie rods connected to right and left side ends of the steering gear 11.

FIG. 2 is a rear view of the steering gear 11 according to the present embodiment. In FIG. 2, a rack-and-pinion mechanism 22 and a power assist mechanism 23 are housed in a steering gear case (rack-and-pinion housing) 21. The rack-and-pinion mechanism 22 is constructed of a first pinion 25 connected to the lower steering shaft 9 and a rack shaft 29 formed, on a right side in FIG. 2, with a first rack 27 meshing with the first pinion 25. The rack shaft 29 is so provided as to be movable bilaterally in FIG. 2 within the rack-and-pinion housing 21.

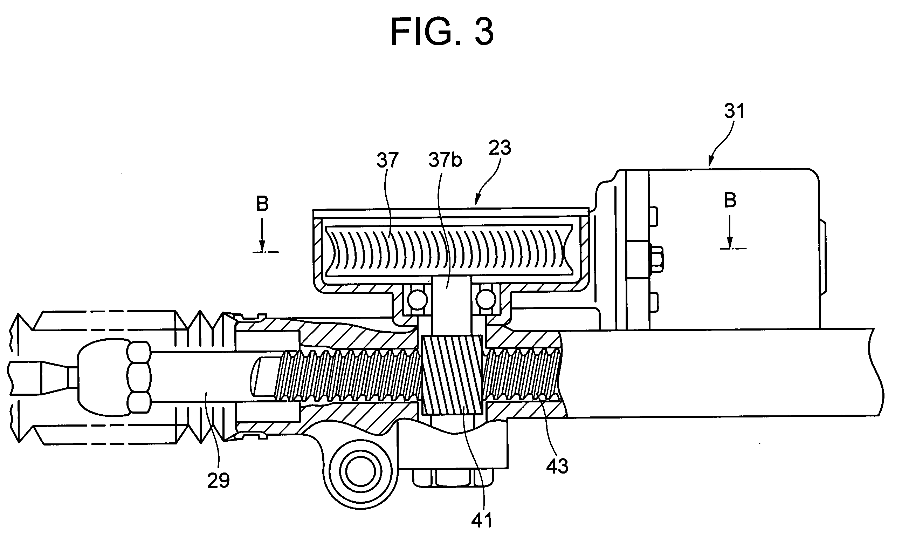

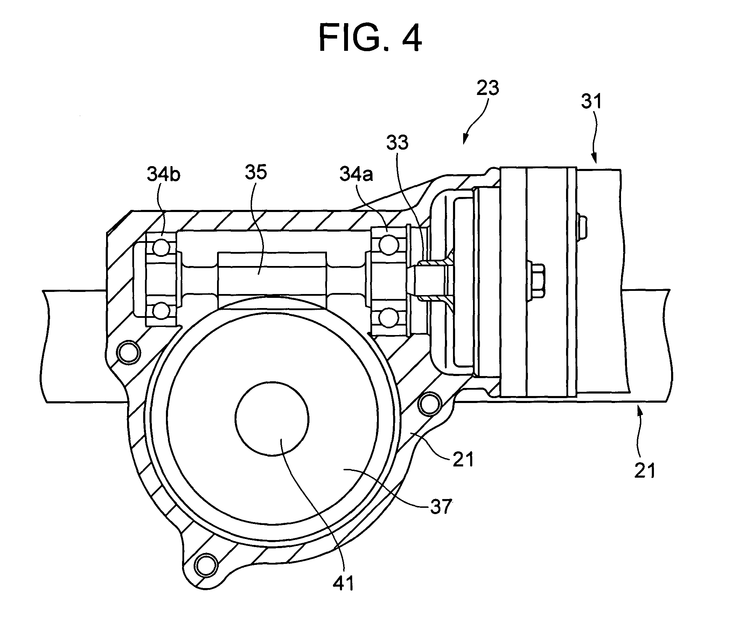

The power assist mechanism 23 is, as shown in FIG. 3 (an enlarged view of a portion A in FIG. 2) and FIG. 4 (a sectional view taken along the line B-B in FIG. 3), constructed of an electric motor 31 that is drive-controlled by a unillustrated control device, a worm speed reduction mechanism including a worm 35 connected to a shaft 33 of the electric motor 31 and a worm wheel 37, and a second pinion 41 fixed to the worm wheel 37. The second pinion 41 meshes with a second rack 43 formed on a rack shaft 29.

The electric motor 31 is integrally fitted to the rack-and-pinion housing 21 in parallel with the rack shaft 29. To be specific, the electric motor 31 is disposed so that a rotary output shaft 33 of the motor 31 is parallel with the rack shaft 29, and the worm 35 connected to the rotary output shaft 33 is also so rotatably supported in the housing 21 via bearings 34a, 34b as to be parallel with the rack shaft 29. A shaft member 37b of the worm wheel 37 meshing with and thus driven by the worm 35 extends at a right angle to a direction in which the rack shaft 29 extends. A second pinion 31 is fixed to the shaft member 37b and thus meshes with the second rack 43 of the rack shaft 29.

In this embodiment, the second pinion 41 is disposed substantially perpendicularly to the rack shaft 29, and the worm wheel 37 fixed to the second pinion 41 rotates within the horizontal plane. Further, the worm 35 meshing with the worm wheel 37 is disposed substantially in parallel with the steering gear case 21 (i.e., the rack shaft 29 supported therein), and the electric motor 31 including the shaft 33 to which the worm 35 is fixed is also disposed substantially in parallel with the rack shaft 29.

The operation in the present embodiment will hereinafter be described.

When a driver rotates the steering wheel 5, a rotational force thereof is transmitted to the steering gear mechanism 11 via the upper steering shaft 3 and the lower steering shaft 9. The steering gear mechanism 11 has the built-in rack-and-pinion mechanism constructed of the first pinion 25 for converting a rotational input into a rectilinear motion and of the first rack 27, and hence the rack shaft 29 moves in any one of the right and left directions. Then, a steering angle of traveling wheels changes through the right-and-left tie rods 15, whereby steering is conducted.

Simultaneously, within the power assist mechanism 23, the electric motor 31 rotates with predetermined rotational torque in any one of forward and reversed directions on the basis of an output of an unillustrated steering torque sensor. Thereupon, a rotational force thereof is transmitted to the rack shaft 29 through the worm speed reduction mechanism including the worm 35 and the worm wheel 37, the second pinion 41 and the second rack 43 meshing with the pinion 41, and the rack shaft 29 is energized in any one of the right and left direction in FIG. 2, thereby actualizing the steering assist.

On the other hand, the steering gear mechanism 11 according to the present embodiment takes such a configuration that the electric motor 31 is disposed substantially in parallel with the rack shaft 29. With this configuration, an amount of upward protrusion of the electric motor 31 from the steering gear case 21 is by far smaller than that in Japanese Utility Model Application No.02-021346, etc., whereby mountability on a vehicle and degree of freedom of layout of peripheral devices are largely improved. Moreover, the electric motor 31 is connected via the worm speed reduction mechanism to the second pinion 41, and it is therefore possible to obtain a large speed reduction ratio with a comparatively simple construction and to actualize a decrease in the number of constructive members.

The discussion on the specific embodiment comes to an end so far, however, the mode of the present invention is not limited to the embodiment given above. For example, the electric motor and the second pinion are connected via the worm speed reduction mechanism in the embodiment discussed above, and may also be connected via paired screw gears, etc.. Further, the electric motor is disposed at the obliquely upper portion of the rack shaft in the embodiment discussed above and may also be disposed, e.g., just laterally of the rack shaft. For others, the whole configuration of the dual pinion system EPS, etc., is not limited to the exemplification in the embodiment discussed above and can be properly changed by a request, etc. in terms of the design or specifications within the range that does not deviate the gist of the present invention.

As discussed above, according to the electric power steering apparatus of the present invention, the electric motor does not largely protrude from the rack housing that houses the rack shaft. Hence, the mountability of the electric power steering apparatus on the vehicle is improved, and simultaneously the layout of the engine and auxiliary machinery, etc is facilitated.

## Claims

1. In an electric power steering apparatus including a rack shaft formed with a first rack meshing with a first pinion connected to a steering shaft and with a second rack meshing with a second pinion driven by a power assist mechanism,
an improvement **characterized in that** said power assist mechanism comprises an electric motor and power transmission means for transmitting a driving force of said electric motor to said second pinion, and
said electric motor is disposed substantially in parallel with said rack shaft.

2. An electric power steering apparatus according to claim 1, wherein said power transmission means is a worm speed reduction mechanism.
